# EUROPEAN PATENT APPLICATION

(11) **EP 3 016 361 A1**
(43) Date of publication of application: **04.05.2016**
(21) Application number: 14190433.4
(22) Date of filing: 27.10.2014
(51) Int. Cl.: H04M 3/30

(54) **Method of error detection for communication device**

(71) Applicant: Compal Broadband Networks Inc., 114 Taipei City (TW)
(72) Inventor: Li, Tzu-Chieh, 302 Hsinchu County (TW); Lu, Hsien-Pin, 302 Hsinchu County (TW)
(74) Representative: Straus, Alexander

(57) **Abstract**

A method of error detection for a VoIP communication device includes receiving a command signal indicating occurrence of an error; performing a virtual phone call according to the command signal; and finding out the error via the virtual phone call. Technician remotely runs test calls to find malfunction with little subscriber assistance.

## Description

### Field of the Invention

The present invention relates to a method of error detection for a communication device, and more particularly, to a method of error detection for voice communication functions in a communication device.

### Background of the Invention

With advances in technology, many network-based products and services have sprung up in recent years. Voice over Internet Protocol (VoIP), which is one of common network-based services, allows people to perform voice communication via a network, e.g. the Internet. A modem is a type of network bridge that allows people to access the Internet via a broadband network. Several modems have VoIP functions, so that people can perform conversation by using these modems.

Sometimes the voice communication functions of the modem may malfunction. For example, a user may fail to hear any voices on the phone, or a telephone may not accurately display a caller's phone number. When these problems occur, the user may ask a multiple-system operator (MSO) who manages the broadband network system to solve the problem/s. In such a condition, an engineer of the MSO may request the user to make a phone call, and the engineer can collect the log file recorded on the modem to find out where the problem is.

In the process of finding the problem, the user should make a phone call or receive a phone call to assist the engineer in data collection, in order to help the engineer debug or find the error. This process consumes a lot of time in communication between the user and the engineer. Since the user is not familiar with the operations of the modem, he/she may not be able to follow the instruction of the engineer or even operate inaccurately, which further increases the difficulty in finding out the error. Thus, there is a need for improvement over the prior art.

### Summary of the Invention

The present invention aims at providing a method of error detection in order to solve the abovementioned problems.

This is achieved by a method of error detection and a communication device according to claims 1 and 14. The dependent claims pertain to corresponding further developments and improvements.

As will be seen more clearly from the detailed description following below, the claimed method of error detection used for a communication device comprises receiving a command signal indicating occurrence of an error; performing a virtual phone call according to the command signal; and finding out the error via the virtual phone call.

### Brief Description of the Drawings

FIG. 1 is a schematic diagram of a network system according to an embodiment of the present invention.
FIG. 2 is a flowchart of an error detection process according to an embodiment of the present invention.
FIG. 3 is a schematic diagram of a virtual web page according to an embodiment of the present invention.
FIGs. 4-6 illustrate exemplary embodiments of the virtual web page.

### Detailed Description

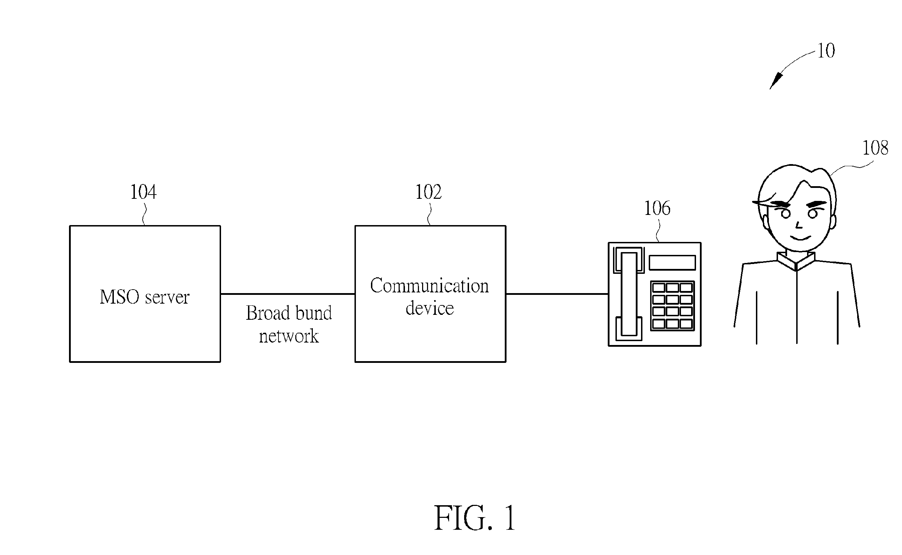

FIG. 1 is a schematic diagram of a network system 10 according to an embodiment of the present invention. The network system 10 includes a communication device 102, a multiple-system operator (MSO) server 104 and a telephone 106. The communication device 102 may be an electronic device capable of voice communication functions such as a modem. The MSO server 104, which is coupled to the communication device 102, provides voice communication services and networking services for a user 108 of the communication device 102. The telephone 106 is coupled to the communication device 102, and the user 108 may make or receive a phone call on the telephone 106 via the communication device 102.

It is notable that the MSO server 104 may also be coupled to other communication devices (not illustrated), so that the MSO server 104 can serve many users simultaneously. Therefore, the following embodiments related to the communication device 102 may be interpreted as being any communication device coupled to the MSO server 104. In general, the MSO server 104 is located in a motor room of an MSO, and the communication device 102 and the telephone 106 are located in the place of the user 108 such as a house, an office or a store. The MSO server 104 is connected with the communication device 102 via a broadband network, which may be cable, digital subscriber line (DSL) or optical fiber, etc. For example, if the broadband network is cable, the network system 10 may be a cable system and the communication device 102 may be a cable modem; if the broadband network is DSL, the network system 10 may be a DSL system and the communication device 102 may be a DSL modem. According to the type of the network system 10, the communication device 102 may have corresponding structures to perform data/voice communication.

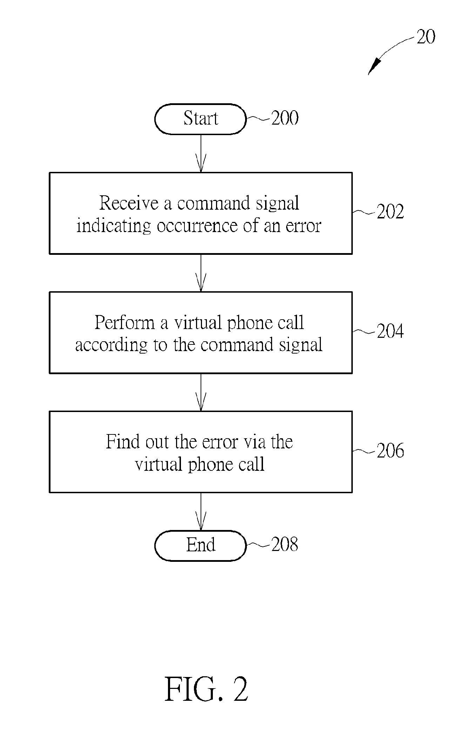

FIG. 2 is a flowchart of an error detection process 20 according to an embodiment of the present invention. The error detection process 20 may be utilized in the communication device 102 of the network system 10 shown in FIG. 1, for error detection. The error detection process 20 may be compiled into a program stored in the communication device 102 and includes the following steps:
Step 200: Start.
Step 202: Receive a command signal indicating occurrence of an error.
Step 204: Perform a virtual phone call according to the command signal.
Step 206: Find out the error via the virtual phone call.
Step 208: End.

According to the error detection process 20, the communication device 102 first receives a command signal indicating occurrence of an error from the MSO server 104. For example, when the user 108 discovers any problem in the communication device 102 or cannot normally use the voice communication functions of the communication device 102, the user 108 may report the issue to the MSO. Thus, the MSO server 104 may send the command signal to the communication device 102 via the broadband network, wherein the command signal indicates that there may be an error in the voice communication path related to the communication device 102. The virtual phone call is then performed according to the command signal. This virtual phone call may be performed by an engineer of the MSO or a manufacturer of the communication device 102, who is able to remotely access the communication device 102. Therefore, the error may be found out via the virtual phone call. It is notable that the engineer may access the MSO server 104 and control the MSO server 104 to be remotely connected to the communication device 102, and then make the virtual phone call on the communication device 102 to find out the error via the virtual phone call. In such a condition, the user 108 may not need to assist the engineer to find out the error in the error detection process 20. More specifically, the phone call made or received by the user 108 is implemented by the virtual phone call in the present invention. The virtual phone call may be utilized for emulating the operations the phone call performed via the telephone 106 by the user 108.

In an embodiment, the virtual phone call is performed in a diagnostic mode. When the communication device 102 receives the command signal from the MSO server 104, the communication device 102 may enter the diagnostic mode. Thus, the engineer may perform various error detection steps in the diagnostic mode.

In general, the error condition in the voice communication path may be classified into two types. One type is an error in the connection of the broadband network; that is, the communication path between the MSO server 104 and the communication device 102. This type of error may occur when the communication device 102 cannot be normally connected to the MSO server 104 due to network issues. For example, if the network identity (ID) of the user 108 is not registered correctly or the required fee is not charged from the user 108, the communication device 102 may fail to connect with the MSO server 104. The other type is an error in the user equipment, e.g. functions of the communication device 102 or the telephone 106, or the connection between the communication device 102 and the telephone 106. For example, the user 108 may also encounter a problem if the telephone 106 is not compatible with the communication device 102, the wired connection between the communication device 102 and the telephone 106 is broken, or the telephone 106 is connected to the communication device 102 in an incorrect manner.

It is notable that the virtual phone call is utilized for finding out in which type the error condition is. If the error occurs in the connection of the broadband network, the engineer of the MSO may directly solve it. The communication device 102 may display a virtual web page related to the virtual phone call, in order to emulate the operations of the real phone call performed via the telephone 106. This virtual web page may display the error condition related to whether the error occurs in the communication between the communication device 102 and the MSO server 104.

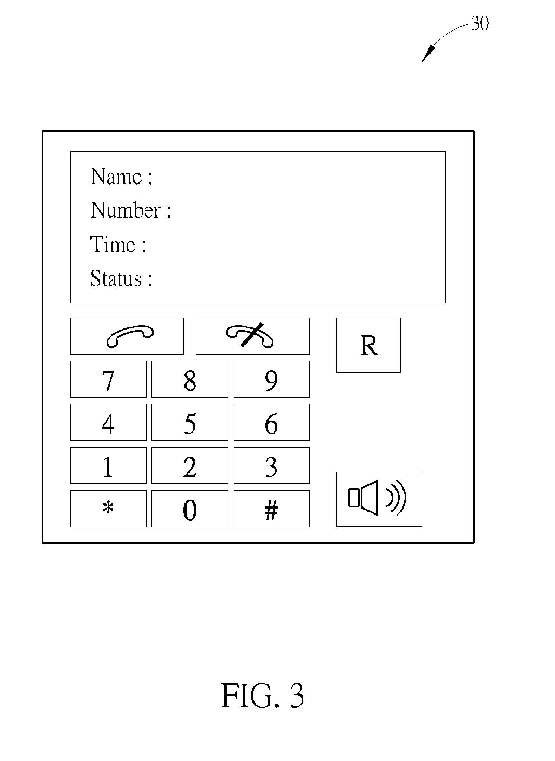

FIG. 3 is a schematic diagram of a virtual web page 30 according to an embodiment of the present invention. The virtual web page 30, which is utilized for performing the virtual phone call, displays a virtual dial key pad of the telephone 106 and several parameters of the virtual phone call. These parameters may include a name, number, time and status related to the virtual phone call. The name indicates a name allocated for the communication device 102 performing the virtual phone call, which may be an outgoing call, an incoming call or an anonymous call. The number specifies the phone numbers of the caller and the callee. The time indicates the time of performing the virtual phone call. The status specifies the status of the virtual phone call, which may point out whether there is an error in the voice communication between the communication device 102 and the MSO server 104.

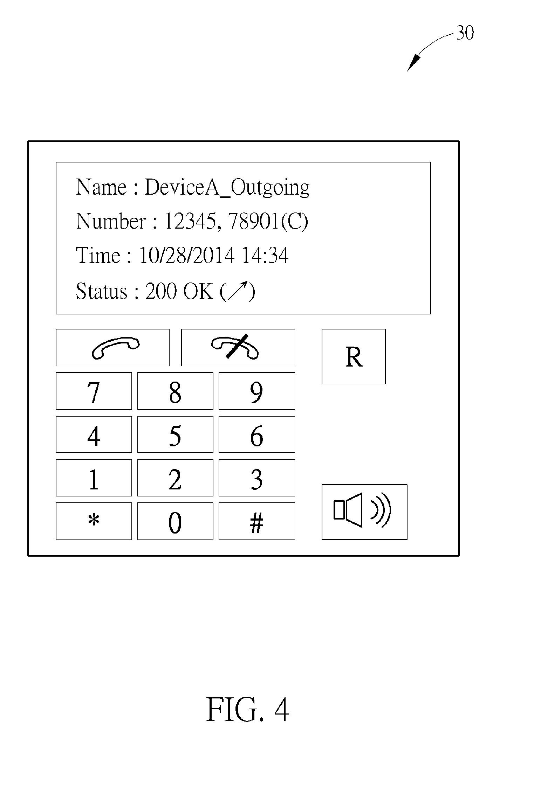

For example, FIG. 4 illustrates an exemplary embodiment of the virtual web page 30. As shown in FIG. 4, the virtual web page 30 displays information related to the virtual phone call. In this information, the name of the communication device 102 is DeviceA, and the virtual phone call is an outgoing call. The number of the caller is 12345, and the number of the callee is 78901, wherein the number of the callee is marked with a sign "(C)". The virtual web page 30 also displays the time of performing the virtual phone call and the status of the virtual phone call, wherein the status "200 OK (↗)" indicates that the virtual phone call is an outgoing call, and it is performed and received successfully. It is notable that the status (e.g. 200 OK) is defined following the standard of session initiation protocol (SIP), which is a signaling protocol used for managing communication sessions such as voice over Internet Protocol (VoIP) telephone calls.

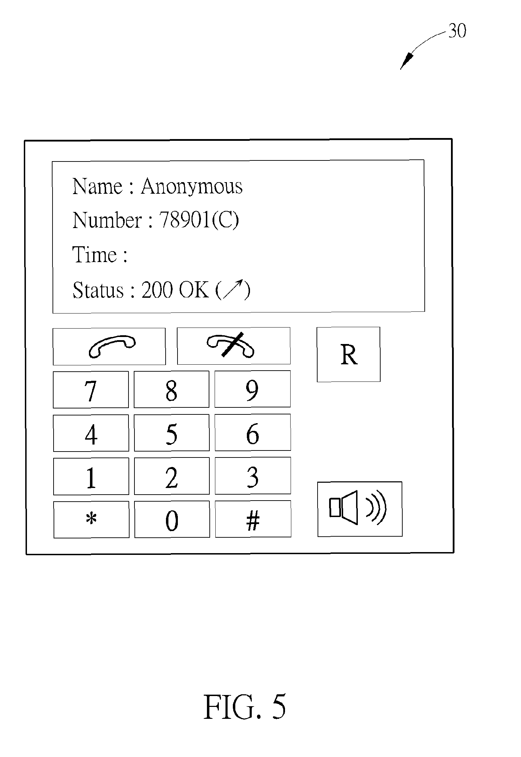

Several error conditions may be displayed in the virtual web page 30. For example, if the user 108 reports the problem that the telephone 106 cannot display the number or the name of the caller in an outgoing call, the virtual web page 30 shown in FIG. 4 may indicate that the caller does not enable a caller ID block function since the caller ID and number are displayed, so this problem will be found out in the settings of the communication device 102 or the compatibility between the communication device 102 and the telephone 106. On the other hand, if the user 108 enables the caller ID block function, the virtual web page 30 may display an image as shown in FIG. 5, where the name is anonymous and the number of the caller is omitted.

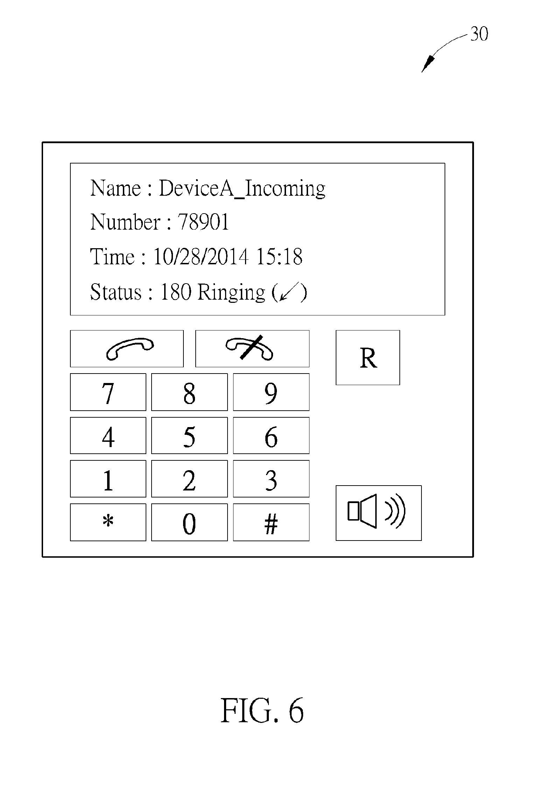

FIG. 6 illustrates another exemplary embodiment of the virtual web page 30. As shown in FIG. 6, the virtual web page 30 displays information related to the virtual phone call. In this information, the name of the communication device 102 is DeviceA, and the virtual phone call is an incoming call. The number of the caller is 78901, and the number of the callee (i.e. the user 108 of the communication device 102) may not need to be displayed. The virtual web page 30 also displays the time of performing the virtual phone call and the status of the virtual phone call, wherein the status "180 Ringing (↙)" indicates that the virtual phone call is an incoming call, and it arrives at the communication device 102 and is able to alert the user 108 via phone rings.

If the user 108 reports the problem that the telephone 106 cannot display the number or the name of the caller in an incoming call, the virtual web page 30 shown in FIG. 6 may indicate that the caller does not enable a caller ID block function since the caller ID and number are displayed, so this problem will be found out in the settings of the communication device 102 or the compatibility between the communication device 102 and the telephone 106.

In an embodiment, the error condition of the virtual phone call may directly be displayed in the status shown in the virtual web page 30. For example, the status may display "430 Flow Failed" according to the SIP, which indicates that the phone call cannot be processed by the MSO server 104 due to a failed network flow. In such a condition, the MSO server 104 may directly find out the error condition by remotely accessing the virtual web page, wherein the engineer of the MSO or the manufacturer of the communication device 102 may not need to further communicate with the user 108 or request additional assistance from the user 108, which significantly increases the convenience of error detection.

It is to be noted that, when the communication device 102 enters the diagnostic mode and is incorporated with the MSO server 104 to find out the error, the communication device 102 may block all traffic between the communication device 102 and the telephone 106, so that the telephone 106 may not be involved in any error detection operation performed by the communication device 102. For example, in a general ringing status of an incoming call, the communication device 102 may send a signal to the telephone 106 to enable phone rings of the telephone 106, so that the user 108 may pick up the phone call after hearing the phone rings. In contrast, in the virtual phone call, an incoming call is only used for emulating a real phone call for error detection in the communication between the communication device 102 and the MSO server 104, so that the communication device 102 may not need to inform the telephone 106 since no assistance is required from the user 108, which prevents the user 108 from being disturbed by the phone rings.

Note that the method of error detection and the related communication device of the present invention are capable of increasing the convenience in error detection. Those skilled in the art can make modifications and alterations accordingly. For example, in the above embodiments, an engineer of the MSO or the manufacturer of the communication device 102 may always remotely access the communication device 102 via the broadband network and the MSO server 104; however, in other embodiments, the engineer may also go to the place of the user 108 and operate the communication device 102 directly to find out the error. In addition, the error condition displayed in the virtual web page may be stored in the communication device 102 or transmitted to the MSO server 104 for follow-up analysis. In another embodiment, a voice communication protocol other than the SIP may also be applied in the error detection process of the present invention (e.g. media gateway control protocol (MGCP)), which should not be limited to what is described herein.

In the prior art, the process of finding problems consumes a lot of time in communication between the user and the engineer. Since the user is not familiar with the operations of the modem, he/she may not be able to follow the instruction of the engineer or may operate the modem inaccurately, which further increases the difficulty in finding out the error. In comparison, the error detection method of the present invention allows an engineer of the MSO or the manufacturer of the communication device to find out the error via a virtual phone call with a virtual web page. In such a condition, the engineer may not need to further communicate with the user or request additional assistance from the user, which significantly increases the convenience of error detection.

## Claims

1. A method of error detection for a communication device (102) **characterized by** the method comprising:
receiving a command signal indicating occurrence of an error;
performing a virtual phone call according to the command signal; and
finding out the error via the virtual phone call.

2. The method of claim 1, **characterized in that** the step of performing the virtual phone call according to the command signal comprises:
entering a diagnostic mode when the command signal is received; and
performing the virtual phone call in the diagnostic mode.

3. The method of any one of claims 1-2, **characterized in that** the received command signal indicating occurrence of the error is from a multiple-system operator (MSO hereafter) server (104).

4. The method of claim 3, **characterized in that** the step of finding out the error via the virtual phone call is performed by the MSO server (104).

5. The method of any one of claims 3-4, further comprising displaying an error condition related to whether the error occurs in a communication between the communication device (102) and the MSO server (104).

6. The method of any one of claims 1-5, **characterized in that** the communication device (102) is coupled to a telephone (106).

7. The method of claim 6, **characterized in that** the communication device (102) displays a virtual web page (30) for performing the virtual phone call to emulate an operation of performing a phone call via the telephone (106).

8. The method of claim 7, **characterized in that** the error condition is displayed in the virtual web page (30).

9. The method of any one of claims 5-8, **characterized in that** the error condition is displayed via a session initiation protocol.

10. The method of any one of claims 5-9, **characterized in that** the error condition is stored in the communication device (102).

11. The method of any one of claims 7-10, **characterized in that** the MSO server (104) accesses the virtual web page (30) to find out the error condition.

12. The method of any one of claims 6-11, **characterized in that** the telephone (106) is not involved in an error detection operation performed by the communication device (102).

13. The method of any one of claims 6-12, **characterized in that** traffic between the communication device (102) and the telephone (106) is blocked when the communication device (102) enters the diagnostic mode.

14. A communication device (102), **characterized by** being configured for carrying out any of the methods of error detection according to any one of claims 1-13.

15. An MSO server (104), **characterized by** being coupled to the communication device (102) of claim 14.

## Amended claims

### Amended claims in accordance with Rule 137(2) EPC.

1. A method of error detection for a communication device (102) **characterized by** the method comprising:
receiving, by a multiple-system operator, hereafter called MSO, server (104), a command signal indicating occurrence of an error from the communication device (102);
performing, by the MSO server (104), a virtual phone call according to the command signal, wherein the virtual phone call emulates a phone call operation in a communication between the communication device (102) and the MSO server (104); and
displaying a graphical user interface which shows information of the virtual phone call, wherein the information indicates the error.

2. The method of claim 1, **characterized in that** the step of performing the virtual phone call according to the command signal comprises:
entering a diagnostic mode when the command signal is received; and
performing the virtual phone call in the diagnostic mode.

3. The method of claim 1, **characterized in that** the step of displaying the graphical user interface which shows the information of the virtual phone call is performed by the MSO server (104).

4. The method of any one of claims 1, further comprising displaying an error condition related to whether the error occurs in the communication between the communication device (102) and the MSO server (104) via the graphical user interface.

5. The method of any one of claims 1-4, **characterized in that** the communication device (102) is coupled to a telephone (106).

6. The method of claim 5, **characterized in that** the communication device (102) displays a virtual web page (30) via the graphical user interface, for performing the virtual phone call to emulate an operation of performing a phone call via the telephone (106).

7. The method of claim 6, **characterized in that** the error condition is displayed in the virtual web page (30).

8. The method of any one of claims 4-7, **characterized in that** the error condition is displayed via a session initiation protocol.

9. The method of any one of claims 4-8, **characterized in that** the error condition is stored in the communication device (102).

10. The method of any one of claims 6-9, **characterized in that** the MSO server (104) accesses the virtual web page (30) to find out the error condition.

11. The method of any one of claims 5-10, **characterized in that** the telephone (106) is not involved in an error detection operation performed by the communication device (102).

12. The method of any one of claims 5-11, **characterized in that** traffic between the communication device (102) and the telephone (106) is blocked when the communication device (102) enters the diagnostic mode.

13. A communication device (102), **characterized by** being configured for carrying out any of the methods of error detection according to any one of claims 1-12.

14. An MSO server (104), **characterized by** being coupled to the communication device (102) of claim 13.
